# EUROPEAN PATENT SPECIFICATION

(11) **EP 2 914 387 B1**
(45) Date of publication and mention of the grant of the patent: **21.03.2018**
(21) Application number: 13783592.2
(22) Date of filing: 29.10.2013
(51) Int. Cl.: B07C 5/36, B07C 5/342

(54) **APPARATUS AND METHOD FOR APPRAISING GEMSTONES**
VORRICHTUNG UND VERFAHREN ZUM BEURTEILEN VON EDELSTEINEN
DISPOSITIF ET PROCÉDÉ D'ÉVALUATION DES PIERRES PRÉCIEUSES

(30) Priority: 30.10.2012 GB 201219519
(43) Date of publication of application: 09.09.2015
(73) Proprietor: De Beers UK Limited, London EC1N 6RA (GB)
(72) Inventor: SMITH, James Gordon Charters, High Wycombe Buckinghamshire HP13 5QL (GB); READ, Philip, South Cerney Gloucestershire GL7 5RF (GB); PORTSMOUTH, Andrew John, Sunninghill Berkshire SL5 7AZ (GB)
(74) Representative: Talbot-Ponsonby, Daniel Frederick
(86) International application number: PCT/EP2013/072584
(87) International publication number: WO 2014/067932

(56) References cited:
- WO-A1-2008/150903
- WO-A1-2011/037481
- WO-A1-2013/135781
- WO-A2-2005/031367
- WO-A2-2008/002985
- US-A1- 2003 222 002

## Description

### Technical field

The invention relates to apparatuses and methods for measuring a parameter of and/or sorting particulate material. More specifically, the invention relates to apparatuses and methods for measuring a parameter of and/or sorting gemstone material, such as rough diamond material.

### Background

A parcel of rough diamonds may be obtained as the output of a mining process, where it is referred to as a Run of Mine (RoM). Additionally, parcels may be obtained commercially. Typically, parcels of rough diamonds will have been sieved so that the particles contained therein are substantially within a specified size range. For example, a -7+5 RoM parcel of rough diamonds will largely comprise rough diamonds that will pass through a No. 7 sieve plate but not a No. 5. Such sieve plate sizes are a de facto standard in the diamond trade.

While such a parcel is typically standardised with respect to size, the material contained therein may well vary in terms of clarity, colour, size and shape. Therefore, someone contemplating the purchase or sale of a parcel may have little idea of the fair price that should be agreed. The price will be driven by the value of the polished gemstones that can be manufactured from the parcel.

To value the parcel the purchaser must somehow inspect the parcel and form an opinion based on an appraisal of the rough goods, a procedure that is time consuming and prone to error. WO 2011/037481 describes an apparatus for appraising gemstones according to the preamble of claim 1, which uses a robotic arm to transport individual stones to a rotatable disk. WO2013/135781 describes an apparatus for inspecting gemstones.

### Summary

According to an aspect of the invention, there is provided an apparatus for appraising gemstones, the apparatus comprising: a measurement cell comprising at least one sensor and a measurement location, the at least one sensor being arranged to measure one or more parameters of a gemstone when the gemstone is located at the measurement location; and a transportation means for transporting the gemstone to the measurement location; wherein the transportation means is configured to cause or allow the gemstone to be stationary at the measurement location whilst the at least one sensor measures one or more parameters of the gemstone. The transportation means is a disc which is rotatable in a horizontal plane with the gemstones supported thereon to transport the gemstones to the measurement location. The apparatus further comprises a feeder configured for continuously feeding individual gemstones from a parcel of gemstones onto the disc.

Optionally, a stepper motor configured to rotate the disc in discrete angular steps.

Optionally, the apparatus further comprises a processor configured as a controlling means for controlling rotation of the disc.

Optionally, the disc comprises transparent or translucent material, the device further comprising a light source configured to illuminate the gemstone through the conveyer when the gemstone is at the measurement location.

Optionally, the light source comprises one or more LEDs configured to emit light having one or more of the colours: red, blue and green.

Optionally, the sensor is located adjacent the measurement location and at a side of the measurement location substantially opposite the light source.

Optionally, the feeder comprises a roller hopper comprising two opposing rollers configured to feed a gemstone onto the disc when the rollers are rotated.

Optionally, the roller hopper is configured to feed the gemstone to a location within an inner region of the disc, the disc further comprising a cam fixed in relation to the rotation of the disc and configured to displace the gemstones to a periphery of the disc as the disc is rotated.

Optionally, the controlling means is configured to control the rotation of the opposing rollers based on the rotation of the disc, such that the gemstones are substantially touching when fed to the location within the inner region of the disc.

Optionally, the at least one sensor comprises a first camera configured to capture an image of a gemstone when it is stationary at the measurement location.

Optionally, the at least one sensor further comprises a second camera configured to capture images at right angles to the images captured by the first camera.

Optionally, the at least one sensor is configured to measure a plurality of parameters whilst the gemstone is stationary at the measurement location.

Optionally, the plurality of parameters comprises two or more of: colour, clarity, size, shape, fluorescence location on the disc and orientation.

Optionally, the apparatus further comprises a sorting means for retrieving the gemstone from the transportation means for movement to one or more locations in dependence on a measured parameter.

Optionally, the sorting means comprises a vacuum nozzle for picking up a gemstone from the transportation means, and wherein the transportation means is configured to cause or allow the gemstone to be stationary at a location where the gemstone may be picked up by the vacuum nozzle.

Optionally, the sorting means comprises a pivotable arm, the vacuum nozzle being located on the arm such that the nozzle may be swung in an arc.

Optionally, the apparatus further comprises a generally circular dispenser array comprising a plurality of dispense containers arranged in a generally circular array.

Optionally, the pivotable arm is configured such that the arc in which the nozzle may be swung intersects a point passed by each of the dispense containers during a complete rotation of the dispenser array, and wherein the nozzle is configured to release a gemstone at a determined time such that the gemstone is deposited into one of the dispense containers, the time being determined based on the one or more measured parameters.

Optionally, the pivotable arm is configured to rotate at a speed substantially equal to the speed of rotation of the dispenser array, such that the nozzle tracks the position of a dispense container as the dispenser array is rotated.

Optionally, the nozzle rotates in a direction opposite to the direction of rotation of the dispenser array.

Optionally, the measurement of the one or more parameters of the gemstone is unsatisfactory, the controlling means is configured to re-circulate the gemstone to the measurement location so that the one or more parameters can be measured again.

Optionally, the measured parameter comprises the location and/or orientation of the gemstone at the measurement location, the device being configured to control the sorting means based on the location and/or orientation of the gemstone to align the sorting means for retrieval of the gemstone.

Optionally, the apparatus comprises a plurality of measurement locations each configured to measure one or more parameters of a gemstone.

Optionally, the sorting means comprises a feeding hub comprising a plurality of vacuum nozzles located around a periphery of the feeding hub and for picking up and setting down gemstones.

Optionally, the feeding hub is configured to pick up a gemstone at a first location and to rotate by a set amount such that the gemstone is transported to one or more locations corresponding to one or more measurement cells.

Optionally, the plurality of nozzles are spaced such that when one of the plurality of nozzles is located at the measurement cell, another of the plurality of nozzles is at the first position for picking up another gemstone.

Optionally, the feeding hub is configured to rotate to transport gemstone to each of a plurality of measurement cells.

Optionally, the feeding hub is configured to stop rotating when a gemstone reaches each of the plurality of measurement cells.

Optionally, the feeding hub is configured to set down a gemstone at one or more of the plurality of measurement cells for a corresponding sensor to measure one or more parameters of the gemstone.

Optionally, the feeding hub is configured to sort particles to one or more locations based on a measurement carried out at the measurement cell.

According to the invention in another aspect, there is provided a method for appraising gemstones, the method comprising: continuously feeding individual gemstones from a parcel of gemstones onto a disc which is rotatable in a horizontal plane; transporting a gemstone on the rotatable disc to a measurement location of a measurement cell, the measurement cell comprising a sensor arranged to measure one or more parameters of a gemstone when the gemstone is located at the measurement location, measuring one or more parameters of the gemstone; and causing or allowing the gemstone to be stationary at the measurement location whilst the at least one sensor measures one or more parameters of the gemstone.

The present invention provides an apparatus (and methods) for inspecting or appraising particulate material. The apparatus provides a measurement cell comprising sensing means and a measurement location within which the sensing means may obtain information on one or more physical properties or parameters of any or each of the particles present therein. The apparatus may comprise a transportation means for transporting the particles of the particulate material to the measurement location. The particle may remain in contact with an element of the transportation means and may be stationary while the measurement takes place.

The apparatus may be used to inspect or appraise the entire parcel of the particulate material provided so as provide an inspection or appraisal of the particles contained therein and optionally a valuation of said material based on a price book, said price comprising suitable formulae, tables or other means of converting from measured parameters or physical properties to a financial or market value estimate of the parcel or elements contained therein.

The apparatus may be used to inspect or appraise or inspect just a portion or cut off of a parcel and the appraisal or valuation so obtained may be applied to the entire parcel.

According to an aspect of the invention, there is provided an apparatus for sorting particulate material. The apparatus may comprise a measurement cell comprising a sensor and a measurement location. The sensor may be arranged to measure one or more parameters of a particle of the particulate material when the particle is located at the measurement location. The apparatus may comprise a transportation means for transporting the particle of the particulate material to the measurement location. The apparatus may comprise a sorting means for retrieving the particle from the transportation means for movement to one or more locations in dependence on a measured parameter. The transportation means may be configured to cause or allow the particle to be stationary for the sorting means to retrieve the particle.

Optionally, the transportation means is a conveyer.

Optionally, a feeder configured to feed individual particles of the particulate material onto the transportation means.

Optionally, the sorting means comprises a vacuum nozzle for picking up a particle of the particulate material from the transportation means. The transportation means may be configured to cause or allow the particle of particulate material to be stationary at a location where the particle may be picked up by the vacuum nozzle.

Optionally, the sorting means comprises a pivotable arm, the vacuum nozzle being located on the arm such that the nozzle may be swung in an arc.

Optionally the pivotable arm or other such means may be used to dispense the particle to one of a plurality of locations, chosen with reference to the measured parameters or physical properties.

Alternatively or in addition, the pivotable arm or other such means may be used to dispense the particle at a predetermined location at a time determined with reference to both the measured parameters or physical properties and the presence of a receiving means.

Alternatively or in addition, the pivotable arm or other such means may be caused to follow a path so that its position in space substantially matches that of a receiving means selected with reference the measured parameters or physical properties that is also in motion for a period of time to allow the particle to be transferred from the vacuum nozzle or the like to the receiving means at any time within said period so that the particle can fall or be propelled directly into the receiving means with insignificant sideways velocity relative to the receiving means.

The receiving means may comprise one of a plurality of removable receptacles arranged around the periphery of a generally circular dispenser array that is caused to rotate continuously about a vertical axis during the sorting process.

Optionally, the measurement location is located such that the sensor is able to measure the one or more parameters of the particle while the particle is on the conveyer.

Optionally, the conveyer is configured to stop when the particle reaches the measurement location.

Optionally, the conveyer is circulatory.

Optionally, if the measurement of the one or more parameters of the stone is unsatisfactory, the conveyer is configured to re-circulate the particle to the measurement location so that the one or more parameters can be measured again.

Optionally, the measured parameter comprises the location and/or orientation of the particle at the measurement location, the device configured to control the sorting means based on the location and/or orientation of the particle to align the sorting means for retrieval of the particle.

Optionally, the measurement cell is configured to detect that the particle is no longer present at the measurement location after retrieval to verify that the particle has been retrieved.

Optionally, the conveyor comprises transparent or translucent material, the device further comprising a light source configured to illuminate the particle through the conveyer when the particle is at the measurement location.

Optionally, the sensor is located adjacent the measurement location at a side substantially opposite the light source.

Optionally, the particulate material comprises rough diamonds and the device is configured to measure the colour, shape and clarity of the diamonds to determine a feature vector.

Optionally, the apparatus comprises a plurality of measurement locations each configured to measure one or more parameters of a particle of the particulate material.

Optionally, the transportation means and/or the sorting means is configured to transport particles of the particulate material to each of the measurement locations.

Optionally, the sorting means comprises a feeding hub comprising a plurality of vacuum nozzles located around a periphery of the feeding hub and for picking up and setting down particles of the particulate material.

Optionally, the feeding hub is configured to pick up a particle at a first location and to rotate by a set amount such that the particle is transported to one or more locations corresponding to one or more measurement cells.

Optionally, the plurality of nozzles are spaced such that when one of the plurality of nozzles is located at one of the one or more measurement cells, another of the plurality of nozzles is at the first position for picking up another particle.

Optionally, the feeding hub is configured to rotate to transport particles to each of a plurality of measurement cells.

Optionally, the feeding hub is configured to stop rotating when a particle reaches each of the plurality of measurement cells.

Optionally, the feeding hub is configured to set down a particle at one or more of the plurality of measurement cells for a corresponding sensor to measure one or more parameters of the particle.

Optionally, the feeding hub is configured to sort particles to one or more locations based on a measurement carried out at the measurement cell.

Optionally, the sensor is configured to have a field of view sufficient to measure one or more parameters of a plurality of particles of the particulate material.

Optionally, the sorting means is configured to retrieve one or more of the plurality of particles and move the one or more particles to one or more locations in dependence on the one or more parameters.

According to an aspect of the invention, there is provided a method for sorting particulate material. The method may comprise transporting a particle of the particulate material to a measurement location of a measurement cell. The measurement cell may comprise a sensor arranged to measure one or more parameters of a particle of the particulate material when the particle is located at the measurement location. The method may comprise measuring one or more parameters of the particle of the particulate material. The method may comprise causing or allowing the particle to be stationary to allow a sorting means to retrieve the particle from the transportation means for movement to one or more locations in dependence on a measured parameter.

According to an aspect of the invention, there is provided an apparatus for measuring a parameter of a particle of gemstone material. The apparatus may comprise at least one measurement cell comprising a sensor and a measurement location. The sensor may be arranged to measure one or more parameters of a particle of the gemstone material when the particle is located at the measurement location. The apparatus may comprise a transportation means configured to transport the particle of the gemstone material to the measurement location. The sensor may be configured to measure the colour, clarity and shape of the particle to determine a feature vector that is associated with the particle.

According to an aspect of the invention, there is provided a method for measuring a parameter of a particle of gemstone material. The method may comprise transporting a particle of the gemstone material to at least one measurement cell comprising a sensor and a measurement location. The sensor may be arranged to measure one or more parameters of the particle of the gemstone material when the particle is located at the measurement location. The method may comprise measuring the colour, clarity and shape of the particle to determine a feature vector. The method may comprise associating the feature vector with the particle.

According to an aspect of the invention, there is provided an apparatus for measuring a parameter of particulate material. The apparatus may comprise a measurement cell comprising a sensor and a measurement location. The sensor may be arranged to measure one or more parameters of a particle of the particulate material when the particle is located at the measurement location. The apparatus may comprise a transportation means configured to transport particles of the particulate material to the measurement location for measuring the one or more parameters. The transportation means is further configured to re-circulate the particle if the measurement of the one or more parameters of the particle is unsatisfactory.

According to an aspect of the invention, there is provided a method for measuring a parameter of particulate material. The method may comprise transporting a particle of the particulate material to a measurement cell comprising a sensor and a measurement location. The sensor may be arranged to measure one or more parameters of the particle of the particulate material when the particle is located at the measurement location. The method may comprise measuring one or more parameters of the particle of particulate material. The method may comprise re-circulating the particle if the measurement of the one or more parameters of the particle is unsatisfactory.

According to an aspect of the invention, there is provided an apparatus for measuring a parameter of particulate material. The apparatus may comprise a measurement cell comprising a sensor and a measurement location. The sensor may be arranged to measure one or more parameters of a particle of the particulate material when the particle is located at the measurement location. The method may comprise a transportation means configured to transport the particle of the particulate material to the measurement location. The device is configured to cause or allow the particle to be stationary whilst the sensor measures one or more parameters of the particle.

According to an aspect of the invention, there is provided a method for measuring a parameter of particulate material. The method may comprise transporting a particle of particulate material to a measurement cell comprising a sensor and a measurement location. The sensor may be arranged to measure one or more parameters of a particle of the particulate material when the particle is located at the measurement location. The method may comprise causing or allowing the particle to be stationary whilst the sensor measures one or more parameters of the particle.

According to an aspect of the invention, there is provided a computer readable medium comprising computer readable code configured when run on a computer to carry out any of the methods described above.

Also disclosed herein is an apparatus for sorting particulate material, the apparatus comprising: a transfer mechanism for picking up a particle of the particulate material and depositing it into a dispense container of a moving dispenser array comprising a plurality of dispense containers, wherein the transfer mechanism is configured to move the particle such that the speed of the particle substantially matches the speed of the dispense container at a time when the particle is deposited into the dispense container.

Optionally, the plurality of dispense containers are arranged in a generally circular array, and wherein the dispenser array is rotating.

Optionally, the transfer mechanism comprises a vacuum nozzle located on a rotating arm and configured to pick up the particle, wherein the arm is configured to rotate about an axis such that the vacuum nozzle matches the speed of the dispense container.

Optionally, the transfer mechanism is configured move the particle such that the velocity of the particle substantially matches the velocity of the dispense container at a time when the particle is deposited into the dispense container.

### Brief description of the drawings

Exemplary embodiments of the invention will now be described with reference to the accompanying drawings, in which:
Figure 1 is a perspective view of a device for measuring a parameter of particulate material;
Figure 2 is a perspective view of a device for measuring a parameter of particulate material;
Figure 3 is a plan view of a device for measuring a parameter of particulate material;
Figure 4 is a schematic representation of a device for measuring a parameter of particulate material;
Figure 5 is a schematic plan view of a device for measuring a parameter of particulate material;
Figure 6 is a perspective view of a feeding hub;
Figure 7 is a plan view of a feeding hub in use with a dispensing hub;
Figure 8a-c shows an arrangement comprising a plurality of concentric independent rotating discs;
Figure 9a shows a plan view of a device for measuring a parameter of particulate material; and
Figures 9b and 9c show possible images captured by a camera.

### Description

The inventors have appreciated that a practical convenient device that is capable of examining a parcel of diamonds in an automated way and forming an appraisal of the diamond with respect to any or preferably all the value determining parameters would be a desideratum.

There are a number of sorting devices with industrial application. Many of these are concerned with the handling of large volumes of relatively large objects such as potatoes or tomatoes and tend to be large scale devices that run continuously. Some devices are configured to work on material comprising smaller objects such as rice or coffee beans. However, such devices commonly function, for example, to remove a small proportion of miscoloured or defective product without any need to sort the majority or all of the material into a range of destinations depending on a set of criteria.

A number of devices have been designed that take concepts from the handling and grading of other materials and apply them to diamond sorting. These machines are derived from concepts embodied in their larger cousins. One exemplary family of such devices may contain a number of prime movers such as hoppers, bowls, nozzle-wheels, carousels and the like all moving synchronously to transfer goods from a supply to a plurality of dispense bins via a measurement cell. The actual routeing of individual stones is typically carried out in motion by flaps, air jets, release of vacuum and the like. A further exemplary family of devices may function by dropping stones through a measurement cell asynchronously and deflecting them by air jets at later times.

The inventors have appreciated that such devices typically are bulky, heavy, expensive, consume large quantities of energy, contain numerous mechanical hazards and are difficult to maintain. The inventors have further appreciated that, by adopting a paradigm of continuous motion, they are able to handle relatively large volumes of goods for example 10-15 stones per second, but they are able only to measure one property of a stone, for example colour, shape or clarity. Therefore, stones typically have to be fed through multiple machines to form an accurate appraisal of more than one property. Such devices do not, therefore, meet the need for a relatively low cost and practical device.

Generally disclosed herein are devices and methods for measuring a parameter of a particle of particulate material that are more compact, lightweight, and have a lower cost. The methods and devices may also sort the particles based on the measured parameters. This may be achieved by the apparently perverse and non-obvious step of abandoning continuous motion. In addition, extra prime movers may be introduced.

The inventors have appreciated that, by incorporating starting and stopping motions of a transportation means, a device may be considerably lighter and cheaper than previous devices. Further, such devices may allow stones to be handled easily for in-situ measurement, or transport for further measurement, or deposition without complicated designs of nozzles or vacuum wands tracking the stone on a transportation means, such as a disc, to be able to pick the stone up.

Furthermore, by conducting the measurements with the transportation means stationary they are able to accumulate signals such as photoelectrons for a substantial period, for example 100 milliseconds, without the complication of motion blur or the need for stroboscopic illumination with flash times of for example 100 microseconds.

The numbers of stones handled by devices disclosed herein may be less than for known devices, which may be considered counterintuitive. For example, the devices disclosed herein may handle approximately one stone every four seconds. However, the inventors have appreciated that the capital costs of the devices disclosed herein are greatly reduced. An operation may therefore obtain a desired capacity by merely using additional devices. Moreover since each device is simpler they are more amenable to manufacture by production line techniques and thus benefit from economies of scale.

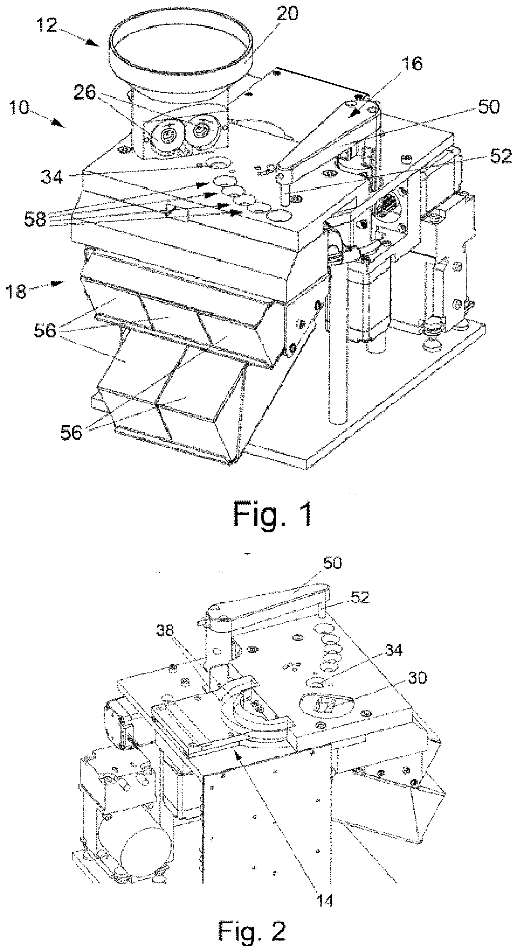

Figure 1 shows an apparatus 10 for measuring a parameter of discrete objects (not shown), also known as particulate material. The apparatus 10 comprises a feeder 12, a handler 16 and a dispense system 18. Some exemplary devices may comprise an agitator 14.

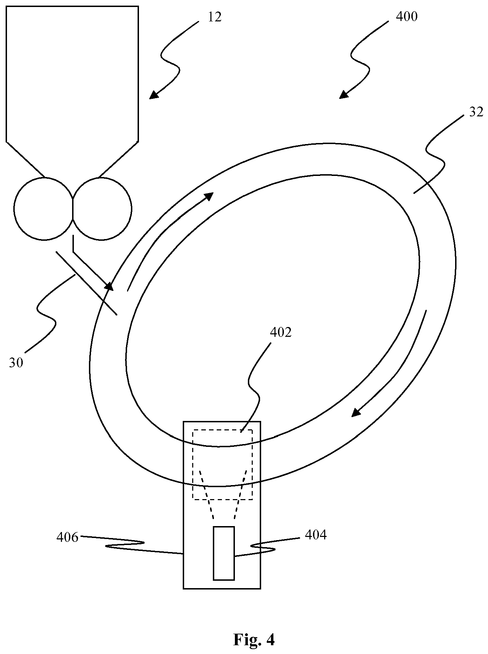

The feeder 12 is best shown in Figure 4 and comprises a low profile plastic hopper 20 configured to accept a pre-sized portion of discrete objects which, in the present case, are provided in the form of a parcel of rough diamond material. In use, the rough diamonds will be gently poured into the hopper 20 from a sample pot, parcel or similar vessel and the proportions and material of the hopper 20 have been selected to ensure minimum abrasion between the rough diamonds.

At the base of the hopper 20 a gap 22 is provided through which the rough diamonds will fall into a well provided between a pair of co-operating longitudinal rollers 26. The rollers 26 are arranged to rotate in opposite directions so as to gradually draw the rough diamonds in the well between and through the rollers 26. The rollers 26 have highly resilient surfaces 28 such that the rough diamonds become embedded in the surfaces 28 without opening a gap between the rollers 26. The speed of the rollers 26 is configured to separate out the stones so that preferably only a single stone is permitted to pass through the feeder 22 at any particular time. This separation ensures that the device 10 is not flooded with too many stones at once and reduces the time the stones are in contact with each other to minimise the risk of abrasion.

Further examples of suitable feeders can be found in UK patents GB 2162828, GB 2194518 or GB 2194779.

It is noted that the required speed of the rollers 26 may vary depending on the range of sizes of stones within the rough diamond material. Broadly speaking, it is desirable for the stone throughput to be slower for small stones (close to 0.01ct) and faster for the larger end of the size spectrum (approaching 0.20ct). However, it is noted that larger stones for example up to 1 ct or 10 ct may be handled, 1 ct being 0.2 grams.

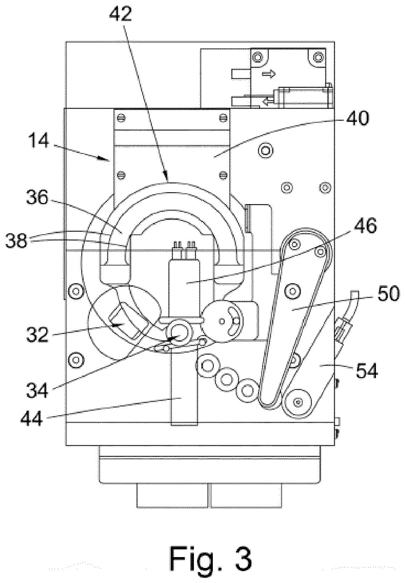

As the individual stones emerge from the rollers 26, they fall onto a plastic slope 30, which is provided below the feeder 12 as shown in Figure 2. The slope 30 directs the stones onto a rotating disc 32, shown in Figure 3, which passes below the end of the slope 30. The rotating disc 32 may be made from fine machined hard plastic and may be configured to provide a suitably high friction co-efficient (discussed below).

The rotating disc 32 provides a circular transportation path along which the stones may be transported at a speed of approximately 924mm/min to a handling area 34. The handling area may comprise a measurement cell, as discussed below.

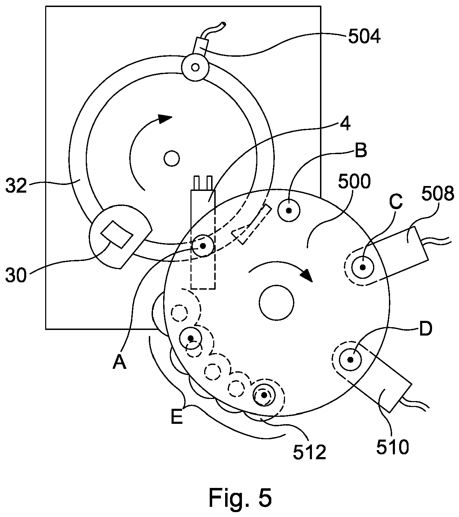

In exemplary devices comprising an agitator 14, and as viewed in Figure 3, the rotating disc 32 rotates in a clockwise direction such that the stones are passed through the agitator 14, best shown in Figure 5. Such exemplary devices may be for use with cut gemstones. The agitator 14 comprises a pair of opposed parallel vertical walls 38 which form a semi-circular channel 36 over half of the rotating disc 32. The walls 38 therefore extend generally along the direction of the path travelled by the stones on the disc 32. In the embodiment shown, the channel 36 has a width of 9mm and a length of 45mm.

The pair of walls 38 are connected to an oscillator 40 configured to oscillate the pair of walls 38 (maintaining their relative positions) in a direction generally transverse to the direction of the travelling path. In the present case, the centre 42 of the pair of walls 38 is configured to oscillate along the radius of the rotating disc 32. Accordingly, the relative traverse movement of the walls 38 across the travelling path is minimal at the entry and exit of the channel 36 and is maximised at the centre of the channel 36.

In use, the oscillating walls 38 collide with the stones on the travelling path. The impact level of the walls 38 is carefully configured so that it is high enough to knock a stone off of a pavilion facet so it lands randomly but not so high as to knock a stone off of its most stable table facet. Accordingly, the stones are repeatedly knocked about within the channel 36 until they eventually land table-down. It is noted that while the stones are moving through the oscillating channel 36, the low friction surface of the rotating disc 32 reduces the possibility of the oscillating channel 36 re-orientating each stone from its table face.

The applicants have found that the optimum impact level is dependent upon at least the following factors: the size of the stones, the width of the channel 36, the stroke length of oscillation, the frequency of oscillation, the speed of transportation through the channel, the channel path and length, and the friction level between the transporting surface and stone. In the present embodiment, they have therefore determined that an oscillation frequency of 4.9 Hz and a stroke length of 14mm is appropriate.

On exiting the oscillating channel 36, the stones continue their path on the rotating disc 32 until they are aligned in the handling area 34.

The apparatus comprises an alignment means configured to align the stones on the rotating disc 32 before they arrive at the handling area 34. The alignment means may comprise a surface angled with respect to the direction of travel of the stones. The angled surface may be configured to radially align the stones on the rotating disc 32.

The handler comprises a rotatable arm 50 pivotally mounted on the apparatus 10 and having a vacuum wand 52 provided at its free end. In exemplary devices, the arm 50 is a sorting means configured to retrieve stones from the rotating disc 32 for placement elsewhere in dependence on a measured parameter of the stone. The vacuum wand 52 is configured to engage with a stone which is supported on the rotating disc 32 and to apply suction to retain the stone on the wand 52 as the arm 50 is pivoted to a new position. In exemplary devices, the arm 50 may be used to pick up and relocate stones after they have passed through a measurement location (discussed below). In exemplary devices, the rotating disc 32 may be configured to stop when a stone reaches a specific location so that the arm 50 may retrieve the stone from the rotating disc. In such devices, the stone is held stationary by the stopping of the rotating disc 32 so that the arm 50 is able to pick up the stone on the vacuum wand (or nozzle) 52.

Exemplary devices may be configured so that when the stone moves past the sensor 44, information about the position of the stone is recorded by the sensor. The stone may be repositioned to a handling position within the handling area 34. In exemplary devices, the repositioning may be performed by small adjustments of the position of the rotating disc 32 in either direction based on information about the position of the stone with respect to the handling area. Exemplary devices may be configured so that when the stone moves past the sensor 44 the rotation of the disc is stopped and reversed to move the stone back to a position within the handling area to allow the stone to be picked up in a known position within the handling area by a sorting means, such as the vacuum wand or nozzle 52. There may be several adjustments in either direction of the rotating disc until the stone stops in the position in the handling area.

Exemplary devices may be configured so that information on the position of the stone is recorded by the sensor 44 and the vacuum wand or nozzle 52 may themselves be repositioned with respect to the position of the stone on the rotating disc 32 when the disc stops to allow the stone to be picked up within the handling area 34.

Figure 4 shows a simplified schematic view of a device 400 for measuring a parameter of a particle of particulate material. The feeder 12 and the slope 30 are configured to direct stones onto the rotating disc 32. A measurement location 402 is located at a point on a path followed by a stone as the disc 32 is rotated. A sensor 404 is located proximal to the measurement location 402 and is configured to measure a parameter of a stone located at the measurement location 402. In exemplary devices, the sensor 404 is located above the measurement location 402. That is, when a stone is at the measurement location 402, the sensor 404 is on an opposite side of the stone to the disc 32.

The device 400 is configured such that the disc 32 rotates to transport the stones from the feeder 12 to the measurement location 402. The device 400 is further configured such that the disc 32 stops rotating when the stone has reached the measurement location 402. In this way, the stone may be held at the measurement location 402 for a sufficient period of time to allow more accurate measurements to be taken.

It is desirable that the stones remain in contact with the disc 32 during its motion and do not slip. Once a stone has settled (e.g. after it has been fed onto the disc 32 by the feeder 12), it will remain in contact with the disc 32 provided the rotational speed of the disc 32 is not too high and any accelerations or decelerations are not too great. One exception to this is when the rough diamond material comprises very round stones (for example spherical stones) that have no stable position of equilibrium, or positions of very low stability, and will therefore roll at relatively low disc speeds and/or accelerations. Fortunately, such stones are rare in nature. This problem may be overcome by proving a plurality of minor depressions (or pockets) on the disc 32 so that troublesome stones will settle into one of these pockets.

It will be understood from elementary kinematics that the desire to stop the diamonds slipping will limit the accelerations and decelerations that can be tolerated to a fraction of the acceleration due to gravity. Such fraction is determined based on the coefficient of friction between the disc 32 and the stone, which should ideally be as large as practical consistent with the optical constraints.

A surface of the disc 32 that supports the stones may therefore be configured to have a relatively high friction coefficient. Even if the disc 32 is configured to have a high coefficient of friction, the accelerations and decelerations of the disc 32 will be limited to modest levels. This is one reason why devices based on unsteady or intermittent motion have been avoided in the art, since this limits the ultimate feed rate. A further barrier to adopting an approach of stopping the rotation of the disc 32 when a stone reaches the measurement location 402 is that devices in the prior art typically have a relatively high amount of inertia in their moving parts and thus would require large driving and braking forces or torques to bring about the desired accelerations and decelerations. This results in oversized and expensive prime movers.

Instead, and contrary to the teaching of the prior art, the inventors have been free to build a machine using the latest lightweight materials so the prime movers are very small and their power consumption negligible (to the level that the machine could be battery powered if that were felt desirable). Although the feed rate is lower, this can be overcome by having multiple devices, which gives further operational flexibility.

The additional benefit of stopping the disc 32 when a stone reaches the measurement location is that it allows measurements (e.g. using cameras, spectroscopy etc.) where it is necessary for the stone to be static. Such measurements require the stone to be static due to the integration time required and/or where the movement of the stone would cause measurement problems.

In exemplary devices, a measurement cell 406 may be considered to comprise the measurement location 402 and the sensor 404. Exemplary devices may be capable of measuring to a useful degree the colour, shape and quality or clarity of each rough diamond through the careful design of a measurement cell. In exemplary devices, it may be possible to estimate the colour of polished stones (possibly along with other properties, such as their clarity and size) that may be obtained from the rough diamond material.

Exemplary devices may be configured to determine one or more properties of a stone simultaneously, for example, in a single measurement. In this context, a single measurement encompasses performing measurements leading to the determination of more than one intrinsic physical parameters of a stone and being able to associate these parameters with that particular stone. In exemplary apparatuses and methods it may be that the measurements, or the acquisition of the data that allows the determination to be made, may occur at a single measurement location 402 at the same time. Alternatively, in other exemplary apparatuses and methods, the measurements may occur at the same measurement location at different times. Alternatively, exemplary apparatuses and methods may comprise a plurality of measurement locations at which one or more measurements is carried out. Therefore, while a single measurement location may be disclosed in exemplary devices, other exemplary devices may perform a first measurement at a first measurement location and a subsequent measurement at a second measurement location and/or or at a later time. It could also be that determinations from a first measurement could determine whether a second measurement is carried out at all.

In specific exemplary devices disclosed herein, when a plurality of measurements of a particular stone are made, they can each be associated with that particular stone. It will immediately be understood that this feature is not present when measurements are made on two different devices and the identity of individual stones is lost between the two devices, for example because the stones have been mixed, possibly in the output bins of the first device.

Exemplary devices may produce data on a number of parameters for each stone (which may be called without limitation a feature vector). In this way, devices are able to act intelligently to produce a number of desirable outcomes which may be used in combination without limitation.

For example:
- The feature vector for each stone may be processed to produce an estimate of the value of each stone based for example on the size, colour and shape measured.
- The feature vector may be processed to produce an estimate of the value of polished stones that may be obtained from each rough stone.
- The feature vector may be used to classify the stone into one of a number of categories dependent on those properties.
- The stone may be directed to one of a plurality of destinations depending on the feature vector or the analysis or classification derived from it.
- In one extreme all the stones may be directed to one location so that the device and the feature vectors for each stone and/or the analysis or classification derived from the feature vectors be associated with that location to derive a valuation or appraisal of the entire parcel without a physical sort.
- In an interim case the stone may be directed to a location determined by the feature vector or analysis thereof and, optionally, the feature vector or said analysis also may be associated with that location to produce a partly sorted output with, optionally, a detailed analysis or valuation for each location, which may take into account the other parameters that are not specifically used for determining the location.
- In another extreme case each stone may be moved to a separate location and the feature vector analysis thereof be associated with that location. Subsequently, when all the stones in the parcel have been examined, the stones may be allocated for example to a smaller number of lots designed so that each one is a fair sample of the parcel.

In exemplary devices, it is possible to measure a plurality of stones at different measurement locations simultaneously and form inferences on each one. Therefore, exemplary devices may comprise a plurality of measurement locations, wherein a plurality of measurements may be undertaken at each measurement location. More specifically, exemplary devices may be configured to determine a feature vector for a plurality of stones simultaneously, wherein each of the stones is at a different measurement location. Exemplary devices may be further configured to retrieve any or each stone separately and direct them to a desired location, or, if one is only interested in the composition of the batch so observed, cause them to be delivered to a single location.

In exemplary devices, a stone is delivered to the measurement cell 406, preferably on a mobile substrate (e.g. disc 32). The substrate may be made of any convenient material but it is desirable that it be made of a transparent or translucent material. It is beneficial if the upper surface of the substrate (which supports the stones) is not completely flat but has some texture to diffuse specular reflections that would otherwise cause spurious interference colours (Newton's fringes) on stones with flat surfaces such as crystals.

Depending on the design of the illumination means the material may be substantially transparent, or may be configured to diffuse light passing through it, for example, by having a milky or opal appearance.

The quality of the results of the measurements undertaken at a measurement cell depend largely on the quality of illumination provided to the stone. While any illumination may be used, in exemplary devices, the light used to illuminate the stone is essentially diffuse. Further, the light used may illuminate the stone from behind, that is, from the opposite side of the stone to the sensor. If a transparent substrate is used the light may be diffused before it hits the substrate. However, it is possible for the light source to be essentially directional and to propagate through a milky or opal substrate to diffuse the light. This produces apparently similar results but careful examination of the images will tend to show that the stone, by reflecting light back into the diffuser substrate, has a subtle influence on the background light level in its vicinity, which may complicate the most critical measurements.

In exemplary devices, the stone rests on a surface and measurements are taken from a sensor located above the stone. This constraint tends to orient or present stones of a particular shape in a predictable and consistent way. Furthermore this constraint naturally presents the stone so that any windows into the stone are favourably oriented. It is noted that exemplary devices may also be configured for viewing from below and illuminating from above with a transparent substrate. This benefit is not obtained for stones in free fall or mounted on nozzles.

In exemplary devices, the illumination is controlled and comes entirely from behind the stone relative to the location of the sensor 404. This means that, during measurement, light collected by the sensor 404 from the stone has passed through the stone and so will have picked up the colour signature of the underlying stone material. By contrast, in known devices for the determination of colour, illumination is at least partly from the front. Thus, in known devices, an image captured by a sensor may comprise a melange of light that has both been reflected from the front of the stone and light that has passed through the stone (typically twice, as it is reflected) and it is not possible to separate those two light components. This can present serious calibration issues when, as is often the case, the colour of the light from the front differs subtly from that from the back.

In exemplary devices, light passing into the stone is exactly the same colour as that observed from the background substrate since the light passing through the stone has already passed through the substrate. This means that any observed difference in colour between the stone and the substrate (with the exception of very slight differential Fresnel losses caused by differences in chromatic dispersion) is a result of colouration of the stone. Any slight colouration of the substrate does not influence the result. By contrast in known devices, some light passes into the stone and is reflected back without entering the substrate while other light only enters the substrate. Thus, known devices are sensitive to the coloration of the substrate which has to be carefully controlled and calibrated, rendering them less reliable.

Parameters of the stones may be measured by any convenient sensor 404. However, in exemplary devices, the senor 404 may comprise an imaging system, such as a colour camera with a CCD or CMOS sensor. In other exemplary devices, other sensors with different spectral sensitivities may be employed.

In exemplary devices, the spectral composition of the illumination source may be matched to the sensor, preferably such that the light levels in the absence of an object are balanced in each channel. However there may be circumstance where this is impractical or undesirable such as in the case when the sensor 404 is configured for the measurement of fluorescence.

In exemplary devices, the illumination may be continuous or quasi continuous in the sense that, while it may be modulated for example by mains flicker, these fluctuations may be smoothed out over the integration time of the sensor 404. Alternatively the illumination may be provided in a flash or single pulse of a limited duration which may freeze motion if any were present.

It is noted that exemplary measurement cells may be provided with a plurality of particles of particulate material within a field of view of a sensor. The particles may be provided to the measurement cell by any means. The measurement cell could then be used to determine at least one intrinsic physical property of any or all of the particles present from, for example, a single image containing all said particles. Optionally, a feature vector can be associated with each particle so characterised via the location in the field inferred from said image. Optionally, additional means may be employed to retrieve any or all of the particles from their positions in the field inferred from the image and cause them to be moved to a location determined by the data in the relevant feature vector. Alternatively, an aggregated feature vector, perhaps characterising the overall properties of said particles could be determined. In this circumstance or otherwise all the particles could be conveyed by a transportation means to a location, container or the like to which all the individual feature vectors, the aggregated vector or properties estimated at least partly from said data, for example their average value, could be associated, thus providing rapid means for providing an appraisal of the particles.

Alternatively or in addition, other sensors may be provided either at the measurement location 402 or at further measurement locations. Without limitation the following devices may be beneficial:
- Instead of or in addition to the measurement described above, a variant thereof may be employed, wherein the illumination is not provided solely from behind the stone, as described above. Such a measurement, although lacking the benefits described may be sufficient to offer useful information. Variations could include, using an opaque substrate, illuminating from the front, using a deliberately directional light source to obtain a silhouette, or other effects.
- A sensor or plurality thereof, configured to measure parameters of stones from a direction other than vertically above may be employed. In exemplary devices, the additional sensors may be oriented at right angles to the normal of the surface. This sensor view provides a projection, analogous to those shown as elevations in technical drawings to complement a plan view (taken from a sensor located above the stone). It is noted that, in its simplest form, such a view may provide a direct measurement of the height of an object which would otherwise be missing from a plan view. It is further noted that, under some circumstances, given the regular crystalline shape of gemstones, it is often possible to infer this dimension from a plan view.
- Any of the above arrangements may be employed using a one dimensional (preferably linear) sensor, such as a line scan sensor and relying on the motion of the object to provide a scan in time.

In exemplary devices, after a stone has passed through one or more measurement locations, it may be determined that the measured parameters are not suitable. For example, the measured parameters may be determined to be inaccurate or unsuccessful. In such circumstances, exemplary devices may be configured to rotate the disc 32 such that the stone makes another pass through the measurement location. This provides the advantage of giving another chance to measure and sort the stone if that proved problematic the previous time, or if, for example, the stone's orientation was non-ideal.

In further exemplary devices, the arm 50 (shown in Figures 1 and 2), which has only one nozzle, may be replaced by a feeding hub, which carries vacuum several nozzles. Therefore, in such devices, the feeding hub is a sorting means. The advantage of this is that this configuration allows a higher throughput as the measurement cell utilisation is higher and also that such a configuration lends itself more readily to the use of more than one measurement cell.

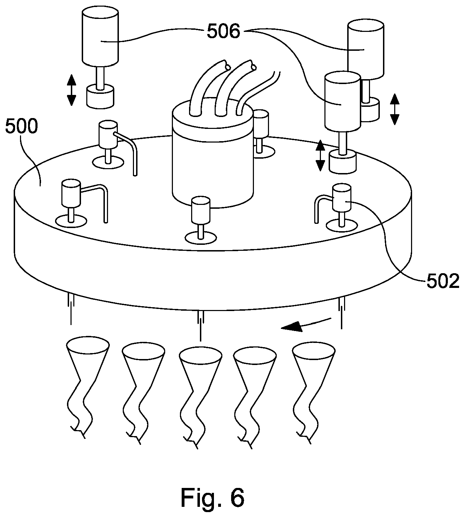

Referring to Figures 5 and 6, a feeding hub 500 comprises a rotating body that carries a plurality of nozzles 502 capable of picking up a stone by the use of vacuum. The nozzles 502 are also capable of vertical movement and pneumatic control to pick up or place down a stone from the end of the nozzle to a surface for measurement purposes.

As described above, stones are placed upon a rotating disc 32 by means of a feeder 12 (Figures 1 to 3). Parameters of the stones are measured by a sensor (which may be a camera) 504, whilst they are lying on the disc 32. The disc may be stopped at a measurement location corresponding to the sensor 504. Further, the disc 32 may be stopped to cause or allow a stone to be stationary to allow the feeding hub 500 to pick up the stone from the disc 32. When a first stone is ready for pick up from the disc 32 (e.g. at point A), a linear actuator 506, placed vertically above a corresponding nozzle 502, is actuated causing the nozzle 502 to travel down to the surface of the disc 32 to pick up the stone by means of vacuum. The actuator 506 is then actuated to return the nozzle 502 to its original vertical position.

Once the stone is picked up, the feeding hub 500 rotates by a set amount, such that the first stone comes to rest at a point B where it waits for a sensor 508 at a first measurement location C to be ready for the stone to be presented to it. This initial rotation has also brought a second nozzle 502 to position A where a second stone may then be picked up in the same way as described above.

Once the sensor 508 at measurement location C is ready, the feeding hub 500 rotates a second time to bring the first stone on the first nozzle 502 to position above measurement location C. A second actuator 506 located above the measurement position C causes the first nozzle 502 carrying the first stone to travel vertically downwards to a measurement location C on a surface. At this time the vacuum is removed and, optionally, positive pressure is applied to release the first stone from the first nozzle 502. The linear actuator 506 allows the first nozzle 502 to return to its original vertical position. A parameter of the first stone is now measured by the sensor 508 at measurement location C.

The second rotation of the feeding hub 500 has brought a third nozzle 502 to position A. Whilst the first stone is being measured at point C, a third stone is picked up by the third nozzle from point A as described above. When the measurement is complete, the measured first stone is picked up by the first nozzle 502, again using the linear actuator 506, and the feeding hub 500 rotates around one position to bring the first stone to a point above a second measurement location D corresponding to a further sensor 510, the second stone to a point above measurement location C, and the third stone to point B. There may be one or more measurement locations arranged in this fashion. The measurement locations may require a stone to be released, or a measurement may be made whilst the stone is on the end of the nozzle 502.

When stones rotate through position E, they are ejected from the end of the nozzle 502, by removing the vacuum and, optionally, applying positive pressure, into one of a plurality of dispense receptacles 512, each of which represent a category of stone based on the physical properties as measured by one or more of the sensors 504, 508, 510.

The machine runs continuously in this start-stop fashion whilst there are stones still to be picked up and, in this way, the movement of the feeding hub is governed by the duration of the slowest measurement but ensuring this measurement position is fully utilised.

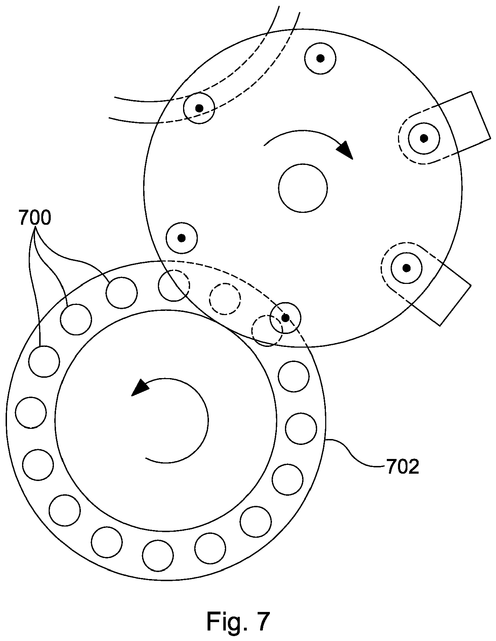

In exemplary devices, and referring to figure 7, fixed dispense receptacles are replaced by a high number of receptacles 700 that are arranged on a third rotating disc 702. An advantage of this configuration is that a higher number of categories may be specified for the measured stones than the fixed configuration of receptacles may allow. Before stones are released, the correct receptacle 700 is rotated into this position.

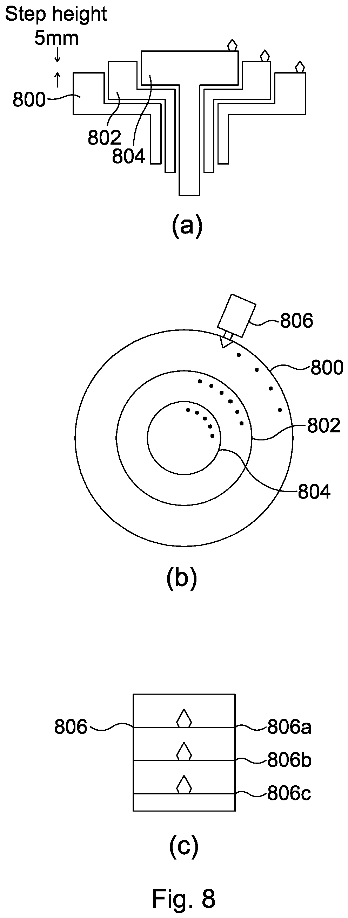

In exemplary devices, and referring to Figure 8, a plurality of concentric rotating discs 800, 802, 804 may be employed. Figure 8a shows a section through the concentric discs 800, 802, 804. The upper surfaces of the discs 800, 802, 804 are staggered, such that the stones have different vertical positions. In exemplary devices, the difference in height between the upper surfaces of the discs 800, 802, 804 may be in the range from 2 mm to 7 mm, or, specifically, may be 5 mm. The discs 800, 802, 804 may be configured to rotate at different angular velocities or, alternatively, may be configured to rotate at the same angular velocity.

In exemplary devices comprising a plurality of independent discs, a plurality of feeders 12 may each be configured to feed stones onto each of the discs 800, 802, 804 respectively.

Further, a sensor 806 (which may be a camera) is positioned at a periphery of the outermost disc 800 for measuring parameters of stones located on upper surfaces of each of the discs 800, 802, 804. In exemplary devices, the sensor 806 comprises three sensors 806a-c, wherein each sensor is configured to measure one or more parameters of a stone located on a corresponding disc 800, 802, 804.

In other exemplary devices, the sensor may comprise a single sensor configured to measure parameters of stones located on any of the discs 800, 802, 804. In such devices, the depth of field of the sensor may be altered in order to measure parameters of a stone at a corresponding location on a disc 800, 802, 804. For example, the discs 800, 802, 804 may each rotate until stones located on each disc 800, 802, 804 are located at respective measurement locations in a field of view of the sensor 806. The discs 800, 802, 804 may be stopped to cause or allow the stones to be stationary at the measurement locations. The sensor may be configured to have a depth of field suitable for measuring one or more parameters of a first stone on a first disc 800 and may undertake one or more measurements of the first stone. After the one or more measurements have been taken, the sensor 806 may be reconfigured to have a depth of field suitable for measuring one or more parameters of a second stone located on a second disc 802 and may undertake one or more measurements of the second stone. After the one or more measurements of the second stone have been taken, the sensor 806 may be reconfigured to have a depth of field suitable for measuring one or more parameters of a third stone located on a third disc 804 and may undertake one or more measurements of the third stone.

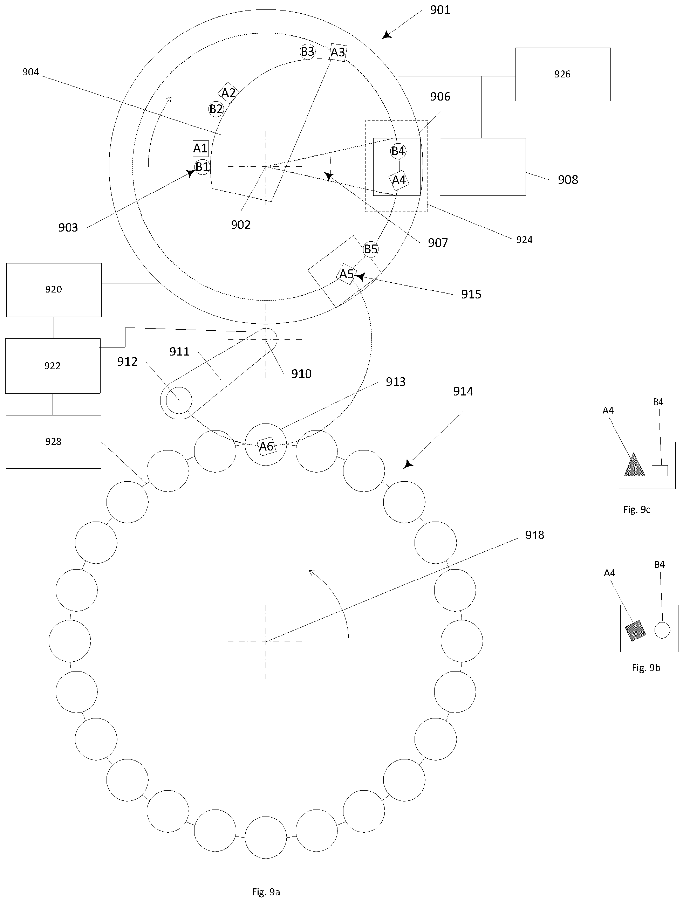

An exemplary apparatus is described below with reference to Figures 9a-c.

A translucent disc 901 comprising, for example, transparent silk finish Perspex (the silk finished surface may be uppermost) is connected at its centre 902 to a stepper motor 920. The stepper motor 920 is shown apart from the disc 901 in Figure 9, but is noted that this is for clarity purposes and the stepper motor 920 may be connected to the disc by, for example, a mechanical linkage and is configured to rotate the disc 901 in discrete angular steps. The disc 901 can be rotated by the stepper motor 920 under control of a controlling means 922 about a vertical axis coincident with the disc centre 902. The controlling means 922 may, for example, be a computer processor configured to execute computer program code to control rotation of the disc 901 and optionally the rotation of rollers of a roller hopper. The disc 901 may be 150mm in diameter and 3mm thick and occupies a horizontal plane. The controlling means 922 may cause the stepper motor 920 to advance the angular position of the disc 901 relative to an arbitrary initial position so that at a given time the disc has a certain angular position.

A feeder comprising a roller hopper mechanism as previously described (not shown in Figure 9a) may be positioned so that it may deposit particles in the vicinity of a location 903 in a central region of the disc 901. The roller hopper deposits the particles onto the disc 901 and, at some time later, the disc 901 is rotated under control of the controlling means 922 and the stepper motor 920 to a different angular position and the particle is carried away from the location 903. For example, particle B1 represents a particle that has been recently deposited at that location 903 and particle A1 represents a particle deposited at a slightly earlier time when the angular position of the disc 901 was slightly different.

The motion of the rollers in the hopper and the disc 901 may be linked in that, if the disc 901 is rotated clockwise through a certain angle the rollers may also advance by a proportional amount. The ratio between motion of the disc 901 and motion of the rollers of the hopper may be controlled by the controlling means 922. The link between rotation of the disc 901 and rotation of the hopper rollers may be provided by the controlling means 922 rather than a mechanical linkage. Thus, the effect may be to deposit a sequence of particles for example A1, B1 in the vicinity of location 903 onto to the disc 901 and the ratio between the motion of the disc 901 and the hopper rollers may be set so that disc 901 advances enough so that, for example, the particles released by the hopper rollers may be, on average, just touching.

As the disc 901 rotates the particles A1, B1 come into contact with a fixed cam 904 mounted just above the disc. The fixed cam 904 is fixed relative to the rotation of the disc 901. As the disc 901 rotates the cam 904 pushes the particles away from the centre of the disc 901 towards a periphery 905 of the disc 901. This is shown in Figure 9 by particles A2, B2, A3, B3. At the periphery 905, the cam profile tapers away. This process naturally causes the particles to separate as their average angular position with respect to the disc 901 is maintained while their radius increases. In particular exemplary apparatus, the periphery 905 of the disc 901 is translucent and may be manufactured using transparent silk finish Perspex.

Thus the mechanism disclosed above provides a stream of separated particles on the disc 901 approximately at a radius determined by the outer surface of the cam 904 plus half the typical diameter of the particles. The spacing and positioning need not be perfect as the subsequent process can accommodate some variation.

A measurement cell is provided with a field of view defined by box 906. The measurement cell may comprise a digital camera 924 such as those provided by Nikon or Canon and a suitable lens to form images having a field of view at least as large as the field of view 906. The camera 924 is shown with a dotted outline in Figure 9 to identify that it is positioned above the disc 901. The camera 924 is therefore a plan view camera controlled by the controlling means 922 and may transmit images back to an image processing means 926. The image processing means 926 may comprise a computer processor configured to execute computer program code to process images captured by the camera. The image processing means 926 and the controlling means 922 may be embodied in the same computer processor. Suitable overall dimensions for field of view 906 may be 30mm in the tangential direction and 20mm in the radial, but these dimensions may be varied.

Illumination is provided from underneath the disc by an array of light emitting diodes (LEDs), which may include devices providing one or more of red, green and blue light. The LEDs may be mounted beneath a diffuser for example made of Opal Perspex, which may be for example 10mm below the under surface of the disc 901. The LEDs may be arranged to illuminate a field larger than that defined by box 906

The length of the field of view 906 in the tangential direction and its distance from the centre 902 of the disc 901 define an angular increment of the disc 901 shown graphically in Figure 9a as 907. The controlling means 922 may be configured such that the disc 901 is rotated by this angle or less between subsequent images so that no particles will be able to pass through the measurement cell without being observed by the camera 924.

In addition, a further, profile, camera 908 is arranged such that it yields a sideways view of a stone or particle located at the measurement cell. An associated illumination means (not shown) may be provided. The profile camera 908 has a field of view tangential to the disc 901 matching 906 in terms of tangential length and provides a two dimensional image of a field above the disc 901 to a convenient height greater than the height of the particles to be observed, for example 10mm.

To operate the exemplary apparatus of Figure 9a the disc 901 is advanced by an angle less than or equal that shown in 907 and an image is captured from field 906 using one or both of cameras 908, 924. This is repeated until such time as an object is identified in the field 906 by the image processing means 926. In the example shown in Figure 9a, A4 and B4 have both entered the field 906 but the image processing means 926 is capable of recoding their individual locations and other physical properties of them, for example, their colour, apparent shape, size and/or clarity.

Further data for example the height of the object may be obtained from the profile camera 908.

To illustrate the general nature of the data (photographs) that may be obtained from the cameras 908, 924, consider Figure 9b representing the image produced from the camera 924 viewing field 906. It may be inferred that object A4 is essentially square in plan and relatively dark, while object B4 is essentially circular in plan and largely clear. Figure 9c represents data taken from the side by the profile camera 908 and provides further information so that it now seems that object A4 is in the form of a pyramid while B4 is approximately cylindrical in shape. The system may be calibrated and/or the field size may be known such that the image processing means 926 is able to determine the size of particles in the field 906.

Such data may be inferred by the automatic image processing 926 to provide a feature vector for each object.

The position, for example the centroid of each objects relative to the field and hence their angular and radial position on the disc 901 may be determined. This together with the height of the object defines a position for each object relative to the disc 901.

This information is used to control a vacuum nozzle 912, which is mounted on an arm 911 and may be rotated about a vertical axis 912 in a horizontal plane. The arm 911 is also provided with a height adjustment motion. Control of the arm 911 and nozzle 912 is provided by the control means 922.

Once an object has been identified and analysed a sorting location for that object is determined. The sorting location may be one of a plurality of dispense containers 913, for example. Each dispense container 913 may, for example, be in the form of vertical tubes sealed at their base but open at the top. The dispense containers 913 may form part of a generally circular dispenser array. In a specific exemplary apparatus, the dispense containers 913 may be attached to the periphery of a dispenser disc or other generally circular member 914 rotating about a central axis.

Without limitation, the dispenser array 914 may rotate at a constant and relatively high angular speed, for example one revolution every one or two seconds. The dispenser array 914 may be rotated by a motor 928 under the control of the controlling means 922. The controlling means 922 may be configured such that that the position of any of the dispense containers 913 may be calculated at any given time.

The controlling means 922 will eventually advance the disc 901 so that, for example, particle A5 is close to a pick up position 915. That is, particle A5 is less than one angular step 907 away from the pick up position 915. In the next step, instead of advancing by the full amount the controlling means 922 will advance the disc 901 by a smaller angle determined by the controlling means 922 to place the centroid of object A5 at position 915 which is beneath the arc of the nozzle 912.

The nozzle 912 is then driven to the vicinity of position 915 at a suitable height determined from the image obtained by the profile camera 908 and shown at Figure 9c, or otherwise a vacuum may be applied to pick the particle up. The exact position along the arc of movement of the nozzle 910 required to pick up the particle may be determined from the position data contained in the image shown in Figure 9b and obtained by the plan view camera 924 viewing field 906.

In an alternative apparatus, the pick-up location 915 and the nozzle 912, arm 911 and, therefore, the arc of the nozzle can be moved closer to the measurement cell and field of view 906. In specific exemplary apparatus, the nozzle 912 and arm 911 may be configured such that the arc of movement of the nozzle 912 passes through the field of view 906. This reduces the chance of the particle moving relative to the disc 901 from the position determined based on the images obtained by the plan view camera and profile camera 908.

The controlling means 922 now determines a release time, being a time when a chosen dispense container 913 will be at a given position, such as the position shown in the Figure 9a, under the arc of movement of the vacuum nozzle 912. The motion of the arm 911 required to place the vacuum nozzle 912 over the determined position at a dispense time is calculated and the arm 911 is moved accordingly. The arm may be moved such that it has a speed that matches the speed of the dispenser array. The linear velocity of the arm may also match the linear velocity of a dispense container of the dispenser array. Therefore, the nozzle 912 may track the position of the dispense container in a region where the arc of movement of the nozzle 912 and the periphery of the dispenser array 914 coincide and, at the appropriate time, the vacuum is released or replaced by air under pressure so that the stone or particle falls from the nozzle 910 into dispense container 913.

The general process then continues until no more stones are seen after several complete rotations or it is determined that one of the dispense containers 913 is full.

While Figure 9a shows a schematic arrangement for an exemplary apparatus it will be apparent that many other arrangements of elements may be provided that serve the purposes disclosed herein. Firstly, in the vicinity of the pickup point 915 the arc of the vacuum nozzle 912 should travel in a substantially radial direction with respect to centre 902 so that the pickup position may be adjusted to accommodate similar variations in the position of the particle to be picked up. Secondly, in the vicinity of the drop off point (for example 913), it should be travelling in a substantially tangential direction with respect to circle 914 so that the motions of the nozzle 912 and for example dispense tube 913 may be matched for a suitable period to facilitate the transfer.

Figure 9a shows an arrangement where the three motion centres 902 912 and 918 (wherein 918 is the centre of rotation of the dispenser array 914) are in a line. While convenient this is not an essential feature. Indeed to transfer the stone reliably it is important to control the forces that the nozzle must apply to the particle in the horizontal plane during the acceleration or it may fall off. Kinematics and intuition lead to the conclusion that the radius of the arc (i.e. the length of the arm 911) should not be too short and in other arrangements, placing the pivot point 912 off the centre line of the other motions may facilitate this or other considerations.

It will be further appreciated that the essential purpose of the transfer could be achieved by trajectories other than an arc. For example the vacuum nozzle or the like could be conducted by means in a straight line departing from disc 901 in a radial direction and meeting the dispenser array 904 (which would have to be repositioned) at a tangent. Thus it will be understood that the selection of the trajectory and means to provide it, and the general arrangement of the elements involve practical engineering compromises to deliver an approximation to the ideals disclosed above and are fully within the spirit of the invention.

The exemplary apparatus disclosed herein exemplify many advantages over the prior art.

It can be seen that a function of disc 901 is to separate, allow observation and optionally to move the particle to a single location where it may be picked up. In, for example, RU2424859C1 other functions, including providing sufficient dispense ways have to be provided on the disk making it bulkier, limited and less convenient. By removing these functions the full 360 degrees of rotation can be devoted to the retained tasks.

It is known that increasing the radius of the particles on the disc by a certain percentage will increase the spacing between their centres by on average the same percentage. However if the cam is restricted to a small sector of the disk, say for example 10 degrees a substantial increase in radius and hence spacing is impractical as the cam would become too steep leading to erratic operation slippages, jamming and the like. Thus the prior art is limited to producing minimal or trivial or insubstantial increases in separation by this otherwise valuable mechanism.

By contrast the apparatus disclosed herein can accommodate a substantial angle of rotation during which the particle is in contact with the cam, for example 90 degrees or 120 degrees. By increasing the angle swept by the face of the cam 904 the inventors have been able to improve the change in radius and hence of the particles without needing an impractically steep cam profile.

Furthermore it will be apparent that the apparatus is tolerant to some degree of overlap between the particles because the removal from the disc is done under control with knowledge of the particle's positions. A blast of air cannot deliver this level of selectivity and distinguish two proximate possibly touching particles.

By taking a measurement of the particle resting on a surface rather than in free fall or on a vacuum nozzle the variability of orientation is reduced. Typically objects will sit in a position that locally minimises the height of their centre of gravity above the disc, often on a flat face. The underlying crystal symmetry of for example diamonds will then tend to produce another flat face directly above allowing the instrument to have a better chance of seeing into the object

The second, profile, view at right angles to the first, plan, view provides a ready measurement of the height or thickness of the stone or particle. For rough diamonds this allows the thickness of "flats", thin stones with two large flat faces to be determined. This is not easily achieved in machines with arbitrary presentation such as in free fall or on nozzles even if they have multiple views.

Although, by way of example, it will be understood that the measurement may be enhanced by capturing multiple images of the stones in the same location with different illumination. For example, providing ultra-violet illumination (for example at a wavelength of 365nm or 385nm) from an LED allows the level of fluorescence in diamonds to be measured, a factor important in their valuation. Since the particles are stationary in the measurement cell there is time in principle to capture multiple images, each taken from the same viewpoint and without blurring.

Since the apparatus can measure multiple properties such as colour, shape, clarity, size and fluorescence, for example, and infer others such as polished colour, polished yield and clarity etc., the data obtained may be sufficient to completely sort the particles, such as rough or cut gemstones, into their final categories or dispense containers. This presents a problem if it is required to physically split the goods into individual items (for example price book items) by colour shape and category. For example the process may require 10, 30, 100 or more dispense containers.

The inclusion of the dispenser array incorporating multiple dispense containers on a continuously moving generally circular member can overcome this problem provided the containers can be placed close enough together to make the dispenser array a reasonable size.

If the dispenser array rotates constantly and the goods are dispensed when the correct container is in place under the nozzle the average delay for a given bin will be the time it takes for half of the containers to pass under the nozzle. Thus, it is desirable to move the containers quickly and keep their spacing small. This creates two problems, Firstly the release time becomes very critical and this is not easy to control when releasing vacuum, and secondly, when the particle is released it has a large horizontal velocity relative to the container and it may hit the side of the tubes and bounce around or out and into another container causing dispense errors, which must be avoided.

The present example overcomes this difficulty or greatly reduces it by matching the motion of the nozzle to the motion of the dispense container so at the point of release the stone has the same linear velocity as the container will have when the stone enters it. This ensures the stones will fall directly into the dispense tubes. The relative position of the tube and nozzle remains important but this is relatively easy to control but the exact time of release and subsequent motion which are hard to control become relatively unimportant and the inventors have found that the accuracy of dispense improves significantly compared to the case where the nozzle is stationary at release.

For example, in a system having a dispenser array with 40 dispense tubes on a diameter of 450mm with each tube spaced by approximately 36mm from the next the device could be operated at a rotational speed of one revolution per second seconds (0.50 second average delay) or even two revolutions per second (0.25 second average delay). Furthermore the disc and the arm which may be 120mm long could be driven directly by a 2" stepper motor driven by Moons model MSST5-S drivers at relatively low powers and neither would present any significant mechanical hazard because of the very low stall torques such devices offer.

A further advantage of the continuously rotating dispenser array is that it is possible to feed particles from multiple inspection systems into one rotating dispenser array each via a separate pivoting arm placed at different points around its periphery.

It is noted that exemplary apparatus and methods are described herein with reference to accompanying figures. For clarity purposes, the figures have been largely restricted to include only those features that are necessary to describe a particular function of an apparatus. However, is understood that features disclosed in respect of an apparatus or method shown in one or more of the figures may also be used in isolation in other apparatus, as necessary. That is, the skilled person would readily understand that apparatus are disclosed that comprise any of features disclosed herein, whether in isolation or in combination with other features.

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

It is understood that parts of the methods disclosed herein can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified herein.

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified herein.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified herein.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted herein may occur out of the order disclosed.

Each feature disclosed or illustrated in the present specification may be incorporated in the invention, whether alone or in any appropriate combination with any other feature disclosed or illustrated herein.

The skilled person will be able to envisage other embodiments without departing from the scope of the appended claims.

## Claims

1. An apparatus for appraising gemstones, the apparatus comprising:
a measurement cell (406) comprising at least one sensor (404;504) and a measurement location (402), the at least one sensor being arranged to measure one or more parameters of a gemstone when the gemstone is located at the measurement location; and
a transportation means (32;901) for transporting the gemstone to the measurement location;
wherein the transportation means is configured to cause or allow the gemstone to be stationary at the measurement location whilst the at least one sensor measures one or more parameters of the gemstone; wherein the transportation means is a disc which is rotatable in a horizontal plane with the gemstones supported thereon so as to transport the gemstones to the measurement location; **characterised in that** the apparatus further comprises a feeder (12) configured for continuously feeding individual gemstones from a parcel of gemstones onto the disc.

2. An apparatus according to claim 1, further comprising a stepper motor (920) configured to rotate the disc in discrete angular steps, and/or a processor (922) configured as a controlling means for controlling rotation of the disc.

3. An apparatus according to claim 1 or 2, wherein the disc (901) comprises transparent or translucent material, the device further comprising a light source configured to illuminate the gemstone through the conveyer when the gemstone is at the measurement location (402), the light source optionally comprising one or more LEDs configured to emit light having one or more of the colours: red, blue and green;
and wherein optionally a sensor is located adjacent the measurement location and at a side of the measurement location substantially opposite the light source.

4. An apparatus according to any preceding claim, wherein the feeder comprises a roller hopper (20) comprising two opposing rollers configured to feed a gemstone onto the disc when the rollers are rotated;
and wherein optionally the roller hopper is configured to feed the gemstone to a location within an inner region of the disc, the disc further comprising a cam (904) fixed in relation to the rotation of the disc and configured to displace the gemstones to a periphery of the disc as the disc is rotated.

5. An apparatus according to claim 4, wherein the controlling means is configured to control the rotation of the opposing rollers based on the rotation of the disc, such that the gemstones are substantially touching when fed to the location within the inner region of the disc.

6. An apparatus according to any preceding claim, wherein the at least one sensor comprises a first camera (924) configured to capture an image of a gemstone when it is stationary at the measurement location, the at least one sensor optionally further comprising a second camera (908) configured to capture images at right angles to the images captured by the first camera, and/or wherein the at least one sensor is configured to measure a plurality of parameters whilst the gemstone is stationary at the measurement location, the plurality of parameters optionally comprising two or more of: colour, clarity, size, shape, fluorescence location on the disc and orientation.

7. An apparatus according to any preceding claim, further comprising a sorting means for retrieving the gemstone from the transportation means for movement to one or more locations in dependence on a measured parameter;
wherein optionally the sorting means comprises a vacuum nozzle (912) for picking up a gemstone from the transportation means, and the transportation means is configured to cause or allow the gemstone to be stationary at a location where the gemstone may be picked up by the vacuum nozzle.

8. An apparatus according to claim 7, wherein the sorting means comprises a pivotable arm (911), the vacuum nozzle (912) being located on the arm such that the nozzle may be swung in an arc, the apparatus optionally further comprising a generally circular dispenser array (914) comprising a plurality of dispense containers (913) around an outer edge of a generally circular member.

9. An apparatus according to claim 8, wherein the pivotable arm (911) is configured such that the arc in which the nozzle may be swung intersects a point passed by each of the dispense containers (913) during a complete rotation of the dispenser array, and wherein the nozzle (912) is configured to release a gemstone at a determined time such that the gemstone is deposited into one of the dispense containers, the time being determined based on the one or more measured parameters, and optionally wherein the pivotable arm is configured to rotate such that a speed of the nozzle is substantially equal to a speed of a dispense container of the dispenser array, such that the nozzle substantially maintains a fixed position relative to the dispense container as the dispenser array is rotated.

10. An apparatus according to any preceding claim, wherein, if the measurement of the one or more parameters of the gemstone is unsatisfactory, the controlling means is configured to re-circulate the gemstone to the measurement location so that the one or more parameters can be measured again.

11. An apparatus according to any preceding claim, wherein the measured parameter comprises the location and/or orientation of the gemstone at the measurement location, the device being configured to control the sorting means based on the location and/or orientation of the gemstone to align the sorting means for retrieval of the gemstone, and optionally wherein the measurement cell is configured to detect that the gemstone is no longer present at the measurement location after retrieval to verify that the particle has been retrieved, and/or wherein the apparatus comprises a plurality of measurement locations each configured to measure one or more parameters of a gemstone.

12. An apparatus according to any preceding claim, wherein the sorting means comprises a feeding hub (500) comprising a plurality of vacuum nozzles located around a periphery of the feeding hub and for picking up and setting down gemstones, and optionally wherein the feeding hub is configured to pick up a gemstone at a first location and to rotate by a set amount such that the gemstone is transported to one or more locations corresponding to one or more measurement cells, and/or wherein the plurality of nozzles is spaced such that when one of the plurality of nozzles is located at the measurement cell, another of the plurality of nozzles is at the first position for picking up another gemstone.

13. An apparatus according to any claim 12, wherein the feeding hub (500) is configured to rotate to transport the gemstone to each of a plurality of measurement cells and optionally to stop rotating when a gemstone reaches each of the plurality of measurement cells.

14. An apparatus according to claim 13, wherein the feeding hub is configured to set down a gemstone at one or more of the plurality of measurement cells for a corresponding sensor to measure one or more parameters of the gemstone and/or to sort gemstones to one or more locations based on a measurement carried out at the measurement cell.

15. A method for appraising gemstones, the method comprising:
continuously feeding individual gemstones from a parcel of gemstones onto a disc (32;901) which is rotatable in a horizontal plane;
transporting each gemstone on the rotatable disc (32;901) to a measurement location (402) of a measurement cell (406), the measurement cell comprising a sensor (404;504) arranged to measure one or more parameters of a gemstone when the gemstone is located at the measurement location,
measuring one or more parameters of the gemstone; and
causing or allowing the gemstone to be stationary at the measurement location whilst the at least one sensor measures one or more parameters of the gemstone.

## Patentansprüche

1. Vorrichtung zum Beurteilen von Edelsteinen, wobei die Vorrichtung Folgendes umfasst:
eine Messzelle (406), die wenigstens einen Sensor (404; 504) und einen Messort (402) umfasst, wobei der wenigstens eine Sensor dafür angeordnet ist, einen oder mehrere Parameter eines Edelsteins zu messen, wenn sich der Edelstein an dem Messort befindet, und
ein Beförderungsmittel (32; 901) zum Befördern des Edelsteins zu dem Messort,
wobei das Beförderungsmittel dafür konfiguriert ist, zu bewirken oder zu ermöglichen, dass der Edelstein an dem Messort unbeweglich ist, während der wenigstens eine Sensor einen oder mehrere Parameter des Edelsteins misst,
wobei das Beförderungsmittel eine Scheibe ist, die in einer horizontalen Ebene drehbar ist, wobei die Edelsteine auf derselben getragen werden, um so die Edelsteine zu dem Messort zu befördern,
**dadurch gekennzeichnet, dass** die Vorrichtung ferner eine Zufuhreinrichtung (12) umfasst, die zum fortlaufenden Zuführen einzelner Edelsteine von einer Partie von Edelsteinen auf die Scheibe konfiguriert ist.

2. Vorrichtung nach Anspruch 1, die ferner einen Schrittmotor (920), der dafür konfiguriert ist, die Scheibe in diskreten Winkelschritten zu drehen, und/oder einen Prozessor (922), der als ein Steuerungsmittel zum Steuern der Drehung der Scheibe konfiguriert ist, umfasst.

3. Vorrichtung nach Anspruch 1 oder 2, wobei die Scheibe (902) durchscheinendes oder lichtdurchlässiges Material umfasst, wobei die Vorrichtung ferner eine Lichtquelle umfasst, die dafür konfiguriert ist, den Edelstein durch den Förderer zu beleuchten, wenn sich der Edelstein an dem Messort (402) befindet, wobei die Lichtquelle wahlweise eine oder mehrere LEDs umfasst, die dafür konfiguriert sind, Licht zu emittieren, das eine oder mehrere der folgenden Farben hat: rot, blau und grün,
und wobei wahlweise ein Sensor angrenzend an den Messort und an einer Seite des Messortes, im Wesentlichen entgegengesetzt zu der Lichtquelle, angeordnet ist.

4. Vorrichtung nach einem der vorhergehenden Ansprüche, wobei die Zufuhreinrichtung einen Rollentrichter (20) umfasst, der zwei gegenüberliegende Rollen umfasst, die dafür konfiguriert sind, einen Edelstein auf die Scheibe zuzuführen, wenn die Rollen betätigt werden,
und wobei wahlweise der Rollentrichter dafür konfiguriert ist, den Edelstein zu einem Ort innerhalb eines inneren Bereichs der Scheibe zuzuführen, wobei die Scheibe ferner einen Nocken (904) umfasst, der im Verhältnis zur Drehung der Scheibe fixiert und dafür konfiguriert ist, die Edelsteine zu einem Rand der Scheibe zu verschieben, wenn die Scheibe gedreht wird.

5. Vorrichtung nach Anspruch 4, wobei das Steuerungsmittel dafür konfiguriert ist, die Drehung der gegenüberliegenden Rollen auf der Grundlage der Drehung der Scheibe derart zu drehen, dass Edelsteine einander im Wesentlichen berühren, wenn sie zu dem Ort innerhalb des inneren Bereichs der Scheibe zugeführt werden.

6. Vorrichtung nach einem der vorhergehenden Ansprüche, wobei der wenigstens eine Sensor eine erste Kamera (924) umfasst, die dafür konfiguriert ist, ein Bild eines Edelsteins aufzunehmen, wenn er an dem Messort unbeweglich ist, wobei der wenigstens eine Sensor wahlweise ferner eine zweite Kamera (908) umfasst, die dafür konfiguriert ist, Bilder im rechten Winkel zu den durch die erste Kamera aufgenommenen Bildern aufzunehmen, und/oder wobei der wenigstens eine Sensor dafür konfiguriert ist, mehrere Parameter zu messen, während der Edelstein an dem Messort unbeweglich ist, wobei die mehreren Parameter zwei der mehr der folgenden umfassen: Farbe, Klarheit, Größe, Form, Fluoreszenz, Position auf der Scheibe und Ausrichtung.

7. Vorrichtung nach einem der vorhergehenden Ansprüche, die ferner ein Sortiermittel zum Zurückholen des Edelsteins von dem Beförderungsmittel zur Bewegung zu einem oder mehreren Orten in Abhängigkeit von dem gemessenen Parameter umfasst,
wobei wahlweise das Sortiermittel eine Vakuumdüse (912) zum Aufnehmen eines Edelsteins von dem Beförderungsmittel umfasst und das Beförderungsmittel dafür konfiguriert ist, zu bewirken oder zu ermöglichen, dass der Edelstein an einem Ort, wo der Edelstein durch die Vakuumdüse aufgenommen werden kann, unbeweglich zu sein.

8. Vorrichtung nach Anspruch 7, wobei das Sortiermittel einen schwenkbaren Arm (911) umfasst, wobei die Vakuumdüse (912) derart an dem Arm angeordnet ist, dass die Düse in einem Bogen geschwenkt werden kann, wobei die Vorrichtung wahlweise ferner eine im Allgemeinen kreisförmige Verteileranordnung (914) umfasst, die mehrere Verteilungsbehälter (913) um eine äußere Kante eines im Allgemeinen kreisförmigen Elements umfasst.

9. Vorrichtung nach Anspruch 8, wobei der schwenkbare Arm (911) derart konfiguriert ist, dass der Bogen, in dem die Düse geschwenkt werden kann, einen Punkt schneidet, der durch jeden der Verteilungsbehälter (913) während einer vollständigen Drehung der Verteileranordnung passiert wird, und wobei die Düse (912) dafür konfiguriert ist, einen Edelstein derart zu einer bestimmten Zeit freizugeben, dass der Edelstein und in einem der Verteilungsbehälter abgesetzt wird, wobei die Zeit auf der Grundlage des einen oder der mehreren gemessenen Parameter bestimmt wird, und wahlweise wobei der schwenkbare Arm dafür konfiguriert ist, sich derart zu drehen, dass eine Geschwindigkeit der Düse im Wesentlichen gleiche einer Geschwindigkeit eines Verteilungsbehälters der Verteileranordnung ist, so dass die Düse im Wesentlichen eine unbewegliche Position im Verhältnis zu dem Verteilungsbehälter aufrechterhält, wenn die Verteileranordnung gedreht wird.

10. Vorrichtung nach einem der vorhergehenden Ansprüche, wobei, falls die Messung des einen oder der mehreren Parameter des Edelsteins unbefriedigend ist, das Steuerungsmittel dafür konfiguriert ist, den Edelstein wieder zu dem Messort zurückzuführen, so dass der eine oder die mehreren Parameter erneut gemessen werden können.

11. Vorrichtung nach einem der vorhergehenden Ansprüche, wobei der gemessene Parameter die Position und/oder Ausrichtung des Edelsteins an dem Messort umfasst, wobei die Vorrichtung dafür konfiguriert ist, das Sortiermittel auf der Grundlage der Position und/oder Ausrichtung des Edelsteins zu steuern, um das Sortiermittel zum Zurückholen des Edelsteins auszurichten, und wahlweise wobei die Messzelle dafür konfiguriert ist, zu erkennen, dass der Edelstein nach dem Zurückholen nicht mehr an dem Messort vorhanden ist, um zu überprüfen, dass das Teilchen zurückgeholt worden ist, und/oder wobei die Vorrichtung mehrere Messorte umfasst, die jeweils dafür konfiguriert sind, einen oder mehrere Parameter eines Edelsteins zu messen.

12. Vorrichtung nach einem der vorhergehenden Ansprüche, wobei das Sortiermittel eine Zufuhr-Drehscheibe (500) umfasst, die mehrere Vakuumdüsen umfasst, die um einen Umfang der Zufuhr-Drehscheibe angeordnet sind und zum Aufnehmen und Absetzen von Edelsteinen dienen, und wahlweise wobei die Zufuhr-Drehscheibe dafür konfiguriert ist, einen Edelstein an einem ersten Ort aufzunehmen und sich um ein festgesetztes Maß zu drehen, so dass der Edelstein zu einem oder mehreren Orten befördert wird, die einer oder mehreren Messzellen entsprechen, und/oder wobei die mehreren Düsen derart beabstandet sind, dass, wenn sich eine der mehreren Düsen an der Messzelle befindet, sich eine andere der mehreren Düsen an der ersten Position zum Aufnehmen eines anderen Edelsteins befindet.

13. Vorrichtung nach Anspruch 12, wobei die Zufuhr-Drehscheibe (500) dafür konfiguriert ist, sich zu drehen, um den Edelstein zu jeder der mehreren Messzellen zu befördern, und wahlweise aufzuhören, sich zu drehen, wenn ein Edelstein jede der mehreren Messzellen erreicht.

14. Vorrichtung nach Anspruch 13, wobei die Zufuhr-Drehscheibe dafür konfiguriert ist, einen Edelstein an einer oder mehreren der mehreren Messzellen abzusetzen, damit ein Sensor einen oder mehrere Parameter des Edelsteins misst, oder und/oder Edelsteine auf der Grundlage einer an der Messzelle ausgeführten Messung zu einem oder mehreren Orten zu sortieren.

15. Verfahren zum Beurteilen von Edelsteinen, wobei das Verfahren Folgendes umfasst:
fortlaufendes Zuführen einzelner Edelsteine von einer Partie von Edelsteinen auf eine Scheibe (32; 901), die in einer horizontalen Ebene drehbar ist,
Befördern jedes Edelsteins auf der drehbaren Scheibe (32; 901) zu einem Messort (402) einer Messzelle (406), wobei die Messzelle einen Sensor (404; 504) umfasst, der dafür angeordnet ist, einen oder mehrere Parameter eines Edelsteins zu messen, wenn sich der Edelstein an dem Messort befindet,
Messen eines oder mehrerer Parameter des Edelsteins und
Bewirken oder Ermöglichen, dass der Edelstein an dem Messort unbeweglich ist, während der wenigstens eine Sensor einen oder mehrere Parameter des Edelsteins misst.

## Revendications

1. Appareil d'évaluation de pierres précieuses, l'appareil comprenant :
une cellule de mesure (406) comprenant au moins un capteur (404 ; 504) et un emplacement de mesure (402), le au moins un capteur étant agencé de manière à mesurer un ou plusieurs paramètre(s) d'une pierre précieuse lorsque la pierre précieuse se trouve au niveau de l'emplacement de mesure ; et
un moyen de transport (32 ; 901) permettant de transporter la pierre précieuse vers l'emplacement de mesure ;
dans lequel le moyen de transport est configuré pour amener la pierre précieuse à être immobile ou lui permettre de l'être, au niveau de l'emplacement de mesure pendant que le au moins un capteur mesure un ou plusieurs paramètre(s) de la pierre précieuse ;
dans lequel le moyen de transport est un disque qui peut tourner dans un plan horizontal, les pierres précieuses étant supportées à sa surface, de manière à transporter les pierres précieuses vers l'emplacement de mesure ;
**caractérisé en ce que**
l'appareil comprend en outre un dispositif d'alimentation (12) configuré pour alimenter en continu sur le disque des pierres précieuses individuelles en provenance d'un paquet de pierres précieuses.

2. Appareil selon la revendication 1, comprenant en outre un moteur pas à pas (920) configuré pour faire tourner le disque par pas angulaires discrets, et/ou un processeur (922) configuré en tant que moyen de commande permettant de commander la rotation du disque.

3. Appareil selon la revendication 1 ou 2, dans lequel le disque (901) comprend un matériau transparent ou translucide, le dispositif comprenant en outre une source lumineuse configurée pour éclairer la pierre précieuse à travers le convoyeur lorsque la pierre précieuse se trouve au niveau de l'emplacement de mesure (402), la source lumineuse comprenant optionnellement une ou plusieurs DEL configurée(s) pour émettre de la lumière présentant une ou plusieurs parmi les couleurs : rouge, bleu et vert ;
et dans lequel optionnellement un capteur est situé adjacent à l'emplacement de mesure et au niveau d'un côté de l'emplacement de mesure essentiellement opposé à la source lumineuse.

4. Appareil selon l'une quelconque des revendications précédentes, dans lequel le dispositif d'alimentation comprend une trémie à galets (20) comprenant deux galets se faisant face configurés pour alimenter une pierre précieuse sur le disque lorsque les galets sont entraînés en rotation ;
et dans lequel optionnellement la trémie à galets est configurée pour alimenter la pierre précieuse vers un emplacement situé au sein d'une région intérieure du disque, le disque comprenant en outre une came (904) fixe par rapport à la rotation du disque et configurée pour déplacer les pierres précieuses vers une périphérie du disque à mesure que le disque est entraîné en rotation.

5. Appareil selon la revendication 4, dans lequel le moyen de commande est configuré pour commander la rotation des galets se faisant face en se basant sur la rotation du disque, de sorte que les pierres précieuses sont essentiellement en contact lorsqu'elles sont alimentées vers l'emplacement situé dans la région intérieure de disque.

6. Appareil selon l'une quelconque des revendications précédentes, dans lequel le au moins un capteur comprend une première caméra (924) configurée pour capturer une image d'une pierre précieuse lorsqu'elle est immobile au niveau de l'emplacement de mesure, le au moins un capteur comprenant en outre optionnellement une deuxième caméra (908) configurée pour capturer des images à des angles droits par rapport aux images capturées par la première caméra, et/ou dans lequel le au moins un capteur est configuré pour mesurer une pluralité de paramètres tandis que la pierre précieuse est immobile au niveau de l'emplacement de mesure, la pluralité de paramètres comprenant optionnellement deux ou plus de deux parmi : couleur, pureté, taille, forme, fluorescence, emplacement sur le disque, et orientation.

7. Appareil selon l'une quelconque des revendications précédentes, comprenant en outre un moyen de tri permettant de récupérer la pierre précieuse à partir du moyen de transport en vue d'un déplacement vers un ou plusieurs emplacement(s) en fonction d'un paramètre mesuré ;
dans lequel optionnellement le moyen de tri comprend une buse d'aspiration (912) permettant de saisir une pierre précieuse en provenance du moyen de transport, et le moyen de transport est configuré pour amener la pierre précieuse à être immobile, ou lui permettre de l'être, au niveau d'un emplacement où la pierre précieuse peut être saisie grâce à la buse d'aspiration.

8. Appareil selon la revendication 7, dans lequel le moyen de tri comprend un bras pivotant (911), la buse d'aspiration (912) étant située sur le bras de sorte que la buse peut parcourir un arc de cercle, l'appareil comprenant en outre optionnellement une série de distributeurs (914) essentiellement circulaire comprenant une pluralité de conteneurs de distribution (913) autour d'un bord extérieur d'un organe essentiellement circulaire.

9. Appareil selon la revendication 8, dans lequel le bras pivotant (911) est configuré de sorte que l'arc de cercle pouvant être parcouru par la buse croise un point passant par chacun des conteneurs de distribution (913) pendant une rotation complète de la série de distributeurs, et dans lequel la buse (912) est configurée pour libérer une pierre précieuse à un moment déterminé de sorte que la pierre précieuse est déposée dans l'un des conteneurs de distribution, ledit moment étant déterminé en se basant sur le ou les paramètre(s) mesuré(s), et optionnellement dans lequel le bras pivotant est configuré pour tourner de sorte qu'une vitesse de la buse est essentiellement égale à une vitesse d'un conteneur de distribution de la série de distributeurs, de sorte que la buse conserve essentiellement une position fixe par rapport au conteneur de distribution à mesure que la série de distributeurs est entraînée en rotation.

10. Appareil selon l'une quelconque des revendications précédentes, dans lequel, si la mesure du ou des paramètre(s) de la pierre précieuse est insatisfaisante, le moyen de commande est configuré pour faire recirculer la pierre précieuse vers l'emplacement de mesure de sorte que l'un ou les plusieurs paramètre(s) peu(ven)t être mesuré(s) à nouveau.

11. Appareil selon l'une quelconque des revendications précédentes, dans lequel le paramètre mesuré comprend l'emplacement et/ou l'orientation de la pierre précieuse au niveau de l'emplacement de mesure, le dispositif étant configuré pour commander le moyen de tri en se basant sur l'emplacement et/ou l'orientation de la pierre précieuse pour aligner le moyen de tri en vue d'une récupération de la pierre précieuse, et optionnellement dans lequel la cellule de mesure est configurée pour détecter le fait que la pierre précieuse n'est plus présente au niveau de l'emplacement de mesure après récupération afin de vérifier que la particule a été récupérée, et/ou dans lequel l'appareil comprend une pluralité d'emplacements de mesure respectivement configurés pour mesurer un ou plusieurs paramètre(s) d'une pierre précieuse.

12. Appareil selon l'une quelconque des revendications précédentes, dans lequel le moyen de tri comprend un rotor d'alimentation (500) comprenant une pluralité de buses d'aspiration situées autour d'une périphérie du rotor d'alimentation et permettant de saisir et de déposer des pierres précieuses, et optionnellement dans lequel le rotor d'alimentation est configuré pour saisir une pierre précieuse au niveau d'un premier emplacement et la faire tourner à concurrence d'une valeur définie de sorte que la pierre précieuse est transportée vers un ou plusieurs emplacement(s) correspondant à une ou plusieurs cellule(s) de mesure, et/ou dans lequel la pluralité de buses est espacée de sorte que, lorsqu'une parmi la pluralité de buses est située au niveau de la cellule de mesure, une autre parmi la pluralité de buses se trouve au niveau de la première position afin de saisir une autre pierre précieuse.

13. Appareil selon la revendication 12, dans lequel le rotor d'alimentation (500) est configuré pour tourner afin de transporter les pierres précieuses vers chacune parmi une pluralité de cellules de mesure et optionnellement pour arrêter la rotation lorsqu'une pierre précieuse atteint chacune parmi la pluralité de cellules de mesure.

14. Appareil selon la revendication 13, dans lequel le rotor d'alimentation est configuré pour déposer une pierre précieuse au niveau d'une ou plusieurs parmi la pluralité de cellules de mesure afin qu'un capteur correspondant mesure un ou plusieurs paramètre(s) de la pierre précieuse et/ou pour trier des pierres précieuses vers un ou plusieurs emplacement(s) en se basant sur une mesure réalisée au niveau de la cellule de mesure.

15. Procédé d'évaluation de pierres précieuses, le procédé comprenant les étapes consistant à :
alimenter en continu des pierres précieuses individuelles en provenance d'un paquet de pierres précieuses vers un disque (32 ; 901) qui peut tourner dans un plan horizontal ;
transporter chaque pierre précieuse sur le disque rotatif (32 ; 901) vers un emplacement de mesure (402) d'une cellule de mesure (406), la cellule de mesure comprenant un capteur (404 ; 504) agencé de manière à mesurer un ou plusieurs paramètre(s) d'une pierre précieuse lorsque la pierre précieuse se situe au niveau de l'emplacement de mesure,
mesurer un ou plusieurs paramètre(s) de la pierre précieuse ; et
amener la pierre précieuse à être immobile, ou lui permettre de l'être, au niveau de l'emplacement de mesure pendant que le au moins un capteur mesure un ou plusieurs paramètre(s) de la pierre précieuse.
